# EUROPEAN PATENT SPECIFICATION

(11) **EP 3 824 168 B1**
(45) Date of publication and mention of the grant of the patent: **08.11.2023**
(21) Application number: 19742960.8
(22) Date of filing: 18.07.2019
(51) Int. Cl.: F01N 13/00, F01N 13/18, F01N 3/34, F01N 3/30, F01N 3/10, F01N 13/10

(54) **MOTORCYCLE ENGINE**
MOTORRADMOTOR
MOTEUR DE MOTO

(30) Priority: 19.07.2018 IT 201800007348
(43) Date of publication of application: 26.05.2021
(73) Proprietor: Piaggio & C. S.P.A., 56025 Pontedera Pisa (IT)
(72) Inventor: NESTI, Paolo, 56025 Pontedera, PISA (IT); MAGAGNINI, Carlo, 56025 Pontedera, PISA (IT); DOVERI, Stefano, 56025 Pontedera, PISA (IT)
(74) Representative: Mitola, Marco
(86) International application number: PCT/IB2019/056162
(87) International publication number: WO 2020/016829

(56) References cited:
- EP-A1- 1 933 011
- DE-A1- 4 443 922
- FR-A1- 2 321 591
- JP-A- H03 264 717
- JP-A- 2002 168 120
- JP-A- 2011 174 473
- US-A- 4 220 625
- US-A- 5 212 949

## Description

### FIELD OF APPLICATION

The present invention relates to a motorcycle engine, in particular a motorcycle engine equipped with a sensor for measuring the oxygen content in the exhaust gas flowing through it.

### STATE OF THE ART

As is known in the motorcycle industry, anti-pollution regulations are increasingly stringent and require the satisfaction of pollution parameters in an increasingly short time. Systems according to the prior art are known for example from JP 2011 174 473 A, JP 03 264 717 A, and FR 2 321 591 A.

In this way legislative limits tend to drastically reduce the pollutant emissions in the 'cold' engine operating phases which represent, as a percentage, the phases with the highest incidence of emissions from the internal combustion engine.

At the same time, there is an increasing need in the motorcycle industry to reduce labour costs and times during maintenance operations.

In order to reduce pollutant emissions, it is known of to arrange the sensor for measuring the oxygen content on the engine head: this way the sensor reaches the optimal operating temperature as quickly as possible.

However, such positioning implies limitations and disadvantages in terms of dimensions and orientation of the sensor itself.

It is also known of to provide a sleeve, interposed between the head and the muffler, on which to fix said oxygen sensor. There are some disadvantages to this solution. In fact, on the one hand the sensor is moved away from the head, and thus the heating time of the same is extended, and on the other the sleeve is fixed to the head by means of a gasket that, at each disassembly, must be changed. Consequently, maintenance times and costs are increased.

### PRESENTATION OF THE INVENTION

The need is therefore felt to resolve the drawbacks and limitations mentioned with reference to the prior art.

Such purpose is achieved by a motorcycle engine according to claim 1.

### DESCRIPTION OF THE DRAWINGS

Further characteristics and advantages of the present invention will be more clearly comprehensible from the description given below of its preferred and non-limiting embodiments, wherein:

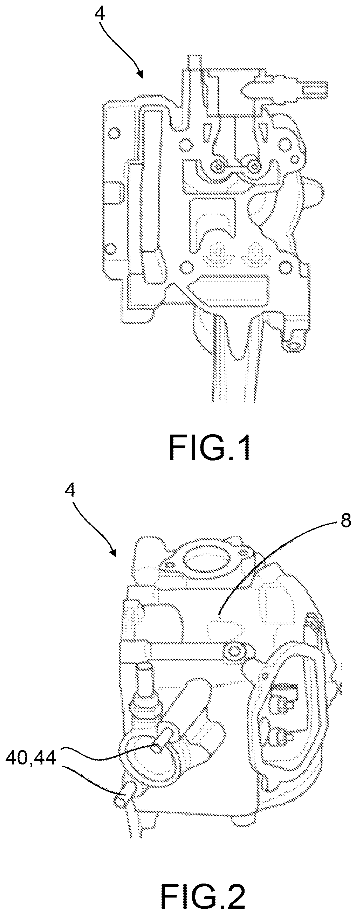

figure 1 shows a perspective view of an engine according to one embodiment of the present invention, in a partially assembled configuration;
figure 2 is a perspective view of the engine in figure 1, from a different angle;

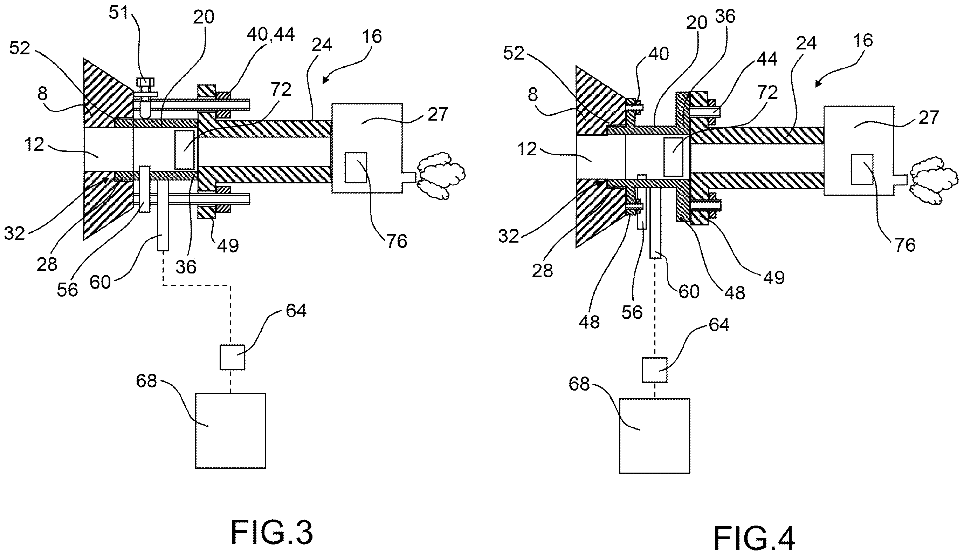

figures 3-5 show partial cross-section views of engines according to possible embodiment variants of the present invention;
Figure 6 is a perspective view of the head of the engine to which an exhaust system is connected in accordance with the present invention.
The elements or parts of elements common to the embodiments described below will be indicated using the same reference numerals.

### DETAILED DESCRIPTION

With reference to the aforementioned figures, reference numeral 4 globally denotes an overall schematic view of an engine for a motorcycle according to the present invention.

For the purposes of the present invention, it should be noted that the engine type is not relevant: therefore, any internal combustion engine, 2 or 4 stroke, Otto or Diesel cycle, of the rotary type (Wankel), regardless of cylinder capacity, and/or number of cylinders/pistons and/or fuel type. It is also specified that the term "upstream" or "downstream" refers to the normal direction of flow of exhaust gases expelled from the engine that pass through the exhaust system

The engine 4, in its generic form, comprises a head 8, which typically delimits a combustion chamber, and which is provided with at least one exhaust duct 12. The exhaust duct 12 is a typically, but not exclusively a cylindrical, circular cross-section duct that conveys the exhaust gases in output from the combustion chamber to an exhaust system 16.

The gas exhaust system 16 comprises a sleeve collar 20, fluidly associated with said exhaust duct 12 from which it receives the flow of exhaust gas in output from the combustion chamber, and a muffler 24 fluidly connected to the sleeve collar 20.

The sleeve collar 20 houses a pre-catalyst 72 for a pre-treatment of the exhaust gas flow and the muffler 24 is in turn provided with a catalyst 76 for the treatment of the exhaust gases and the reduction of the polluting emissions, in particular of HC and NOx. Said pre-catalyst arranged in the sleeve collar 20 allows easier maintenance and replacement of the exhaust system 16. Furthermore, it allows an easier customization of the pre-catalyst according to the engine used by the motorcycle.

The sleeve collar 20 extends from a proximal end 28, at least partially housed inside a seat 32 formed on the head 8, at the exhaust duct 12, to a distal end 36, fluidly connected to the muffler 24. The muffler may in turn comprise a silencer.

The seat 32 is typically an annular seat coaxial to the exhaust duct 12.

The sleeve collar 20 is mechanically connected to the head 8, preferably by means of first fixing means 40, while the muffler 24 is mechanically connected directly to the head 8 or it is connected to the head 8 by means of the sleeve collar 20, preferably by second fixing means 44.

The first fixing means 40 and / or the second fixing means 44 may comprise screws and / or bolts preferably arranged at relative perimeter flanges 48.

According to a possible embodiment, the first and second fixing means 40,44 coincide with each other: in other words, the same fixing means 40,44 achieve the fastening of the sleeve collar 20 to the head 8 and the muffler 24 to the sleeve collar 20. Therefore, the same bolts or screws passing through holes aligned with each other may allow locking between the head 8, the sleeve collar 20 and the muffler 24. The sleeve collar 20 can be kept in position during assembly by a positioning element 51 preferably constituted by a screw which engages the sleeve collar against the head 8, preventing it from coming out of the seat 32 during the connection of the muffler 24.

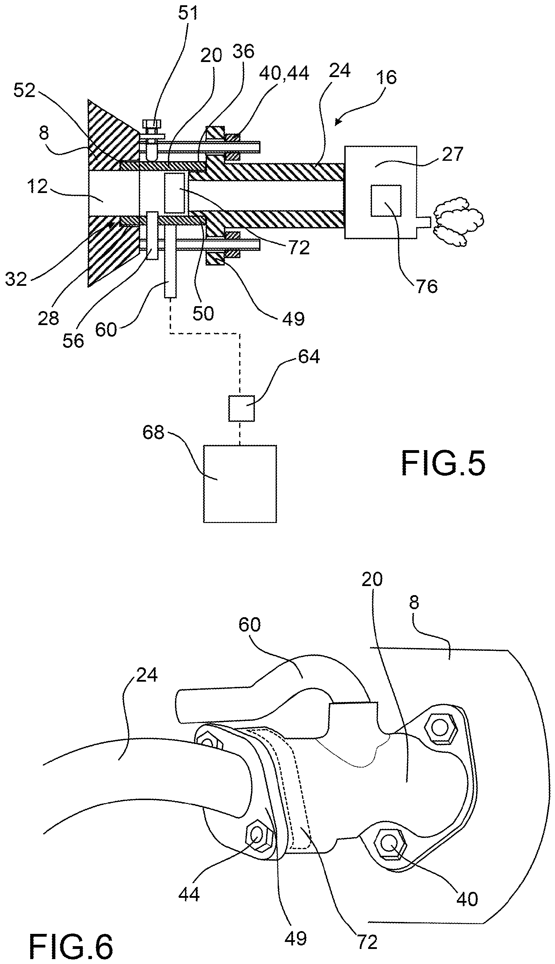

According to a possible embodiment, the second fixing means 44 comprise a shaped coupling between cylindrical portions 50 of the sleeve collar 20 and the muffler 24 at least partially inserted into each other (Figure 5).

At the seat 32 on the head 8, exhaust gas sealing means 52 are housed. These sealing means may be of various types, depending on the specific needs of the manufacturer.

According to a possible embodiment, the sealing means 52 comprise a bellows seal, typically having a ring shape. The bellows seal is suitable to compress axially after assembly so as to maintain a compressive state that ensures sealing over time. For example, said bellows seal may be at least partially made of graphite.

It is also possible that the sealing means 52 comprise a copper gasket. Typically, the copper gasket is a ring gasket that is axially compressed. This type of gasket is not normally reusable since, as a result of assembly compression, it undergoes an axial yield strength phenomenon, with relative plastic deformation, which ensures gas-tight sealing.

According to the invention the sleeve collar 20 comprises a sensor 56 for measuring the oxygen content in the exhaust gas flowing through it. Preferably said sensor 56 is arranged upstream of the pre-catalyst 72.

According to a possible embodiment, said sensor 56 for measuring the oxygen content is arranged radially with respect to the sleeve collar 20. The radial arrangement may vary according to the needs and dimensions available. The depth or penetration, in the radial direction, inside the sleeve collar is such as to allow the exhaust gases flowing into the sleeve collar to completely lap the sensor 56, so as to allow the latter to easily measure the amount of oxygen present in said flow.

According to a possible embodiment variant, the sleeve collar 20 comprises an air supply duct 60 for injecting air into the exhaust gas flow.

Preferably, the air supply duct 60 is provided with an inlet valve 64 which allows / inhibits the passage of said air flow.

For example, said inlet valve 64 is a lamellar valve.

The air supply duct 60 is fluidly connected to an air filter 68 of the engine 4. Preferably, in the embodiment with the air supply duct, the pre-catalyst 72 is placed downstream the air supply duct 60 on the sleeve collar 20.

The operation of the engine according to the present invention, and in particular the assembly/disassembly of an exhaust system of an engine in accordance with the present invention, will now be described.

In particular, under operating conditions, the exhaust gases produced in the combustion chamber are evacuated through the exhaust duct 12. From here they flow into the sleeve collar 20 where they lap the sensor 56 that measures the oxygen content present therein. Thanks to the positioning of the sensor 56 near the head 8, due to the interpenetration of the proximal end 28 of the sleeve collar 20 in the seat 32 of said head, said sensor reaches the correct operating temperature very quickly. If the air supply duct 60 is provided, it is also possible to supply an additional air flow into the sleeve collar 20, preferably via the relative inlet valve 64, so as to obtain a post-combustion exhaust.

In the event that it is necessary to disassemble the wheel and/or muffler 24, it is possible to disassemble only the second fixing means 44 so as to remove the muffler 24 without having to disassemble the sleeve collar 20 and the components connected thereto. This allows the seal 52 to be safeguarded, in particular when it is made of copper

In the event that the second and first fixing means 44,40 coincide, then both the muffler 24 and the sleeve collar 20 may be disassembled from the head 8. In this case, preferably a bellows seal 52, preferably graphite, is adopted that can be reused without having to be replaced when reassembling the exhaust system 16.

Removal of the muffler is generally required on a scooter during the rear wheel disassembly operation for tyre replacement. In the case of a "monolithic" type muffler, i.e. with manifold and silencer conceived as a single piece, for its disassembly it is necessary to remove the fixing means 44 that concern the attachment of the exhaust manifold to the sleeve collar 20/cylinder head. On the sleeve collar 20, fluidly associated with the exhaust duct, there are sealing means 52 that may be affected by the disassembly of the muffler if a locking system of said sleeve collar is used where the fastening means 40 and 44 coincide. Diversely, with fixing means 40,44 distinct from each other, the sealing means 52 will not be affected by the muffler disassembly operation.

As may be appreciated from the description, the present invention makes it possible to overcome the drawbacks mentioned of the prior art.

In particular, the present invention allows a more effective reading of the oxygen content within the exhaust gas flow in internal combustion engines, with particular reference to motorcycle engines. In fact, the lambda probe or oxygen content reader is arranged on the sleeve collar directly connected to the engine head. In this way said probe is particularly close to the heat source: this is an advantage because the probe or reader, in order to function correctly, must reach a minimum operating temperature as quickly as possible. The positioning of said probe on the sleeve collar allows, especially with a cold motor, the achievement of this minimum operating temperature in the shortest possible time and therefore a better operation of the probe itself.

Advantageously, it is possible to make the sleeve collar in the same material as the head or in the same material as the muffler, as required.

Thanks to the present invention it is possible to disassemble/reassemble the rear wheel of a motorcycle, typically a scooter, very easily and economically. In fact, it is possible to separate the muffler from the sleeve collar without having to disassemble the sleeve collar and the probe connected to it. In addition, avoiding the disassembly of the sleeve collar from the head also avoids having to replace the relative seal gasket, if, for example, it cannot be reused.

In addition, the orientation of the sensor can be easily changed, for example for reasons of size and reading, with respect to solutions in which the sensor is installed on the engine head.

In addition, the sleeve collar also allows for mounting an air supply duct, connected upstream of an air filter, so that air can be introduced into the exhaust gas flow to perform a post-combustion and meet the requirements of EURO 5 type anti-pollution regulations. Again, in cases of disassembly of the muffler, for example to replace the wheel, it is not necessary to disassemble the manifold and all the elements connected to it, such as the lambda probe and/or the air supply duct.

Furthermore, thanks to the fact that the proximal end is at least partially housed within a seat made on the head, it is possible to shorten the overall cantilever length of said sleeve collar: in this way it is possible to anticipate, with respect to the prior solutions, the curvature of the muffler as a function of the dimensions and/or the specific technical and/or aesthetic needs of the motorcycle.

A person skilled in the art may make numerous modifications and variations to the solutions described above so as to satisfy contingent and specific requirements while remaining within the sphere of protection of the invention as defined by the following claims.

## Claims

1. Motorcycle engine (4) comprising
- a head (8) equipped with at least one exhaust duct (12),
- a gas exhaust system (16) comprising a sleeve collar (20), fluidly associated with said exhaust duct (12), and a muffler (24) fluidly connected to the sleeve collar (20),
wherein
- the sleeve collar (20) is mechanically connected to the head (8),
- and the muffler (24) is mechanically connected to the head (8) directly or by means of the sleeve collar (20),
wherein said sleeve collar (20) comprises a sensor (56) for measuring the oxygen content in the exhaust gas flow passing through it;
**characterized in that** said sleeve collar (20) houses a pre-catalyst (72) for a pre-treatment of the exhaust gas flow, and wherein the muffler (24) is provided with a catalyst (76).

2. Motorcycle engine (4) according to claim 1, wherein said sleeve collar (20) is mechanically connected to the head (8) with first fixing means (40).

3. Motorcycle engine (4) according to claim 1 or 2, wherein the muffler (24) is mechanically connected to the head (8) and/or sleeve collar (20) with second fixing means (44).

4. Motorcycle engine (4) according to any one of previous claims, comprising exhaust gas sealing means (52), preferably said sealing means (52) comprises a bellows seal, more preferably said bellows seal is at least partially made of graphite.

5. Motorcycle engine (4) according to any one of previous claims, wherein the sealing means (52) comprises a copper gasket.

6. Motorcycle engine (4) according any one of the preceding claims, wherein said sensor (56) for measuring the oxygen content is arranged radially with respect to the sleeve collar (20), preferably positioned upstream the pre-catalyst (72).

7. Motorcycle engine (4) according to any one of the preceding claims, wherein the sleeve collar (20) comprises an air supply duct (60) for injecting air into the exhaust gas flow, preferably positioned upstream the pre-catalyst (72).

8. Motorcycle engine (4) according to claim 7, wherein the air supply duct (60) is provided with an inlet valve (64) which allows / inhibits the passage of said air flow.

9. Motorcycle engine (4) according to claim 8, wherein said intake valve (64) is a reed valve.

10. Motorcycle engine (4) according to any one of claims 7 to 9, wherein the air supply duct (60) is fluidly connected to an air filter (68) of the engine (4).

11. Motorcycle engine (4) according to any one of the preceding claims, wherein the sleeve collar (20) extends from a proximal end (28), at least partially housed within a seat (32) within the head (8) to a distal end (36) connected to the muffler (24) .

12. Motorcycle engine (4) according to any one of the preceding claims, wherein the first fixing means (40) and / or the second fixing means (44) comprise screws and / or bolts arranged in correspondence with relative perimeter flanges (48,49).

13. Motorcycle engine (4) according to any one of the preceding claims, wherein the first and second fixing means (40,44) coincide with each other.

14. Motorcycle engine (4) according to any one of the preceding claims, wherein said second fixing means (44) comprise a shape coupling between cylindrical portions (50) of the sleeve collar (20) and of the muffler (24), at least partially inserted one into the other.

## Patentansprüche

1. Motorradmotor (4) umfassend
- einen Kopf (8), der mit zumindest einem Abgas- bzw. Auslasskanal (12) ausgestattet ist,
- ein Gasauslasssystem (16), das einen Hülsenkragen bzw. eine Hülsenmanschette (20), der bzw. die fluidisch mit dem Auslasskanal (12) verbunden ist, und einen Schalldämpfer (24) umfasst, der fluidisch mit dem Hülsenkragen (20) verbunden ist,
wobei
- der Hülsenkragen (20) mechanisch mit dem Kopf (8) verbunden ist,
- und der Schalldämpfer (24) direkt oder mittels des Hülsenkragens (20) mechanisch mit dem Kopf (8) verbunden ist,
wobei der Hülsenkragen (20) einen Sensor (56) zum Messen des Sauerstoffgehalts in dem ihn durchströmenden Abgasstrom umfasst;
**dadurch gekennzeichnet, dass** der Hülsenkragen (20) einen Vorkatalysator (72) für eine Vorbehandlung des Abgasstroms beherbergt, und wobei der Schalldämpfer (24) mit einem Katalysator (76) versehen ist.

2. Motorradmotor (4) nach Anspruch 1, wobei der Hülsenkragen (20) mit ersten Fixier- bzw. Befestigungsmitteln (40) mechanisch mit dem Kopf (8) verbunden ist.

3. Motorradmotor (4) nach Anspruch 1 oder 2, wobei der Schalldämpfer (24) mit zweiten Fixier- bzw. Befestigungsmitteln (44) mechanisch mit dem Kopf (8) und/oder dem Hülsenkragen (20) verbunden ist.

4. Motorradmotor (4) nach einem der vorhergehenden Ansprüche, umfassend Abgasdichtungsmittel (52), wobei vorzugsweise das Dichtungsmittel (52) eine Balgdichtung umfasst, wobei bevorzugter die Balgdichtung zumindest teilweise aus Graphit besteht.

5. Motorradmotor (4) nach einem der vorhergehenden Ansprüche, wobei das Dichtungsmittel (52) eine Kupferdichtung umfasst.

6. Motorradmotor (4) nach einem der vorhergehenden Ansprüche, wobei der Sensor (56) zum Messen des Sauerstoffgehalts radial in Bezug auf den Hülsenkragen (20) angeordnet ist, vorzugsweise stromaufwärts des Vorkatalysators (72) positioniert.

7. Motorradmotor (4) nach einem der vorhergehenden Ansprüche, wobei der Hülsenkragen (20) einen Luftzufuhrkanal (60) zum Einbringen von Luft in den Abgasstrom umfasst, der vorzugsweise stromaufwärts des Vorkatalysators (72) positioniert ist.

8. Motorradmotor (4) nach Anspruch 7, wobei der Luftzufuhrkanal (60) mit einem Einlassventil (64) versehen ist, das den Durchtritt des Luftstroms ermöglicht/verhindert.

9. Motorradmotor (4) nach Anspruch 8, wobei das Einlassventil (64) ein Membranventil ist.

10. Motorradmotor (4) nach einem der Ansprüche 7 bis 9, wobei der Luftzufuhrkanal (60) fluidisch mit einem Luftfilter (68) des Motors (4) verbunden ist.

11. Motorradmotor (4) nach einem der vorhergehenden Ansprüche, wobei sich der Hülsenkragen (20) von einem proximalen Ende (28), das zumindest teilweise in einem Sitz (32) innerhalb des Kopfes (8) untergebracht ist, zu einem distalen Ende (36) erstreckt, das mit dem Schalldämpfer (24) verbunden ist.

12. Motorradmotor (4) nach einem der vorhergehenden Ansprüche, wobei die ersten Befestigungsmittel (40) und/oder die zweiten Befestigungsmittel (44) Schrauben und/oder Bolzen umfassen, die entsprechend relativen bzw. jeweiligen Umfangsflanschen (48, 49) angeordnet sind.

13. Motorradmotor (4) nach einem der vorhergehenden Ansprüche, wobei die ersten und die zweiten Befestigungsmittel (40,44) miteinander übereinstimmen bzw. zusammenfallen.

14. Motorradmotor (4) nach einem der vorhergehenden Ansprüche, wobei die zweiten Befestigungsmittel (44) eine Formkopplung zwischen zylindrischen Abschnitten (50) des Hülsenkragens (20) und des Schalldämpfers (24) umfassen, und zwar zumindest teilweise ineinander eingesetzt.

## Revendications

1. Moteur de motocyclette (4) comprenant
- une culasse (8) équipée d'au moins un conduit d'échappement (12),
- un système d'échappement de gaz (16) comprenant un manchon (20), en communication fluidique avec ledit conduit d'échappement (12), et un silencieux (24) relié fluidiquement au manchon (20),
dans lequel
- le manchon (20) est relié mécaniquement à la culasse (8),
- et le silencieux (24) est relié mécaniquement à la culasse (8) directement ou au moyen du manchon (20),
dans lequel ledit manchon (20) comprend un capteur (56) pour mesurer la teneur en oxygène dans le flux de gaz d'échappement le traversant ;
**caractérisé en ce que** ledit manchon (20) contient un précatalyseur (72) pour un prétraitement du flux de gaz d'échappement, et dans lequel le silencieux (24) est doté d'un catalyseur (76).

2. Moteur de motocyclette (4) selon la revendication 1, dans lequel ledit manchon (20) est relié mécaniquement à la culasse (8) avec un premier moyen de fixation (40).

3. Moteur de motocyclette (4) selon la revendication 1 ou la revendication 2, dans lequel le silencieux (24) est relié mécaniquement à la culasse (8) et/ou au manchon (20) avec un deuxième moyen de fixation (44).

4. Moteur de motocyclette (4) selon l'une quelconque des revendications précédentes, comprenant un moyen d'étanchéification de gaz d'échappement (52), de préférence ledit moyen d'étanchéification (52) comprend un soufflet d'étanchéité, de manière davantage préférée ledit soufflet d'étanchéité est au moins partiellement constitué de graphite.

5. Moteur de motocyclette (4) selon l'une quelconque des revendications précédentes, dans lequel le moyen d'étanchéification (52) comprend un joint en cuivre.

6. Moteur de motocyclette (4) selon l'une quelconque des revendications précédentes, dans lequel ledit capteur (56) pour mesurer la teneur en oxygène est agencé radialement par rapport au manchon (20), de préférence positionné en amont du précatalyseur (72).

7. Moteur de motocyclette (4) selon l'une quelconque des revendications précédentes, dans lequel le manchon (20) comprend un conduit d'alimentation en air (60) pour injecter de l'air dans le flux d'air d'échappement, de préférence positionné en amont du précatalyseur (72).

8. Moteur de motocyclette (4) selon la revendication 7, dans lequel le conduit d'alimentation en air (60) est doté d'une soupape d'entrée (64) qui permet/inhibe le passage dudit flux d'air.

9. Moteur de motocyclette (4) selon la revendication 8, dans lequel ladite soupape d'admission (64) est une soupape flexible.

10. Moteur de motocyclette (4) selon l'une quelconque des revendications 7 à 9, dans lequel le conduit d'alimentation en air (60) est relié fluidiquement à un filtre à air (68) du moteur (4).

11. Moteur de motocyclette (4) selon l'une quelconque des revendications précédentes, dans lequel le manchon (20) s'étend d'une extrémité proximale (28), au moins partiellement contenue dans un siège (32) dans la culasse (8), à une extrémité distale (36) reliée au silencieux (24).

12. Moteur de motocyclette (4) selon l'une quelconque des revendications précédentes, dans lequel le premier moyen de fixation (40) et/ou le deuxième moyen de fixation (44) comprend des vis et/ou des boulons agencés en correspondance avec des brides périphériques (48, 49) relatives.

13. Moteur de motocyclette (4) selon l'une quelconque des revendications précédentes, dans lequel les premier et deuxième moyens de fixation (40, 44) coïncident l'un avec l'autre.

14. Moteur de motocyclette (4) selon l'une quelconque des revendications précédentes, dans lequel ledit deuxième moyen de fixation (44) comprend un accouplement par complémentarité de forme entre des portions cylindriques (50) du manchon (20) et du silencieux (24), au moins partiellement insérées les unes dans les autres.
